# FASCICULE DE BREVET EUROPEEN

(11) **EP 3 288 786 B1**
(45) Date de publication et mention de la délivrance du brevet: **18.09.2019**
(21) Numéro de dépôt: 15727432.5
(22) Date de dépôt: 28.04.2015
(51) Int. Cl.: B29L 31/30, B29K 307/04, B29C 69/02, B60G 7/02, B60G 7/00

(54) **BRAS DE LIAISON EN MATÉRIAUX COMPOSITE PAR EXEMPLE POUR SUSPENSION DE ROUE DE VÉHICULE ET SON PROCÉDÉ DE FABRICATION**
VERBINDUNGSARM, ZUM BEISPIEL FÜR EINE FAHRZEUGRADAUFHÄNGUNG, UND VERFAHREN ZUR HERSTELLUNG DAVON
LINKING ARM, FOR EXAMPLE FOR A VEHICLE WHEEL SUSPENSION, AND METHOD FOR MANUFACTURING SAME

(43) Date de publication de la demande: 07.03.2018
(73) Titulaire: Hutchinson, 75008 Paris (FR)
(72) Inventeur: COMPIGNE, Camille, 77300 Fontainebleau (FR); CIOLCZYK, Jean-Pierre, 45200 Montargis (FR); FLORENTZ, Bertrand, 45200 Paucourt (FR)
(74) Mandataire: Gevers & Orès
(86) Numéro de dépôt international: PCT/FR2015/051157
(87) Numéro de publication internationale: WO 2016/174316

(56) Documents cités:
- WO-A1-2011/141538
- FR-A1- 2 993 806
- US-A- 5 267 751
- US-A- 5 720 833

## Description

La présente invention concerne un bras de liaison adapté pour relier entre elles deux structures ou masses soumises à des efforts, et un procédé de fabrication de ce bras. L'invention s'applique en particulier à une liaison au sol pour train de roues avant ou arrière d'un véhicule automobile, dans une suspension de roue qui comporte notamment des logements recevant, d'une part, une articulation de liaison à une fusée de la roue et, d'autre part, au moins une articulation de liaison par exemple au châssis du véhicule.

D'une manière connue, les liaisons au sol de véhicules automobiles incorporent des bras de suspension qui comportent une rotule de liaison à la fusée de roue et deux articulations de liaison au châssis du véhicule, ces trois articulations formant ensemble un triangle conférant au bras une forme globalement triangulaire. Ces bras de liaison sont généralement métalliques et donc relativement lourds.

On a cherché ces dernières années à alléger de tels bras métalliques en utilisant en remplacement des matériaux composites, comme par exemple décrit dans le document US-A-5,267,751 qui divulgue un bras triangulaire de liaison pour suspension dont les trois côtés du périmètre sont formés de fibres longitudinales continues et unidirectionnelles imprégnées d'une résine et sont reliés entre eux uniquement par les trois sommets du triangle, sans portion centrale s'étendant à partir de ces côtés. Ce bras est pourvu de plaques de protection formant équerres et de supports de fixation fixés au châssis de manière rigide, i.e. non articulée.

Le document WO-A1-2011/141538 enseigne de réaliser un bras triangulaire de liaison pour suspension de type recevant une rotule de liaison à la fusée de roue et deux articulations pour la liaison au châssis, en une coque creuse moulée comprenant deux demi-coques. Le bras présente un rebord formant un bossage périphérique qui définit une cavité sur le pourtour du bras, et chaque demi-coque est formée de plusieurs couches d'un matériau composite à base de fibres orientées imprégnées d'une matrice polymérique. La coque reçoit dans sa cavité interne une âme ductile métallique à la jonction entre les demi-coques, cette âme étant recouverte par les demi-coques uniquement dans une zone intermédiaire de la coque située vers l'intérieur de son rebord creux. Une ou plusieurs couches de renforcement du bras sont fixées sur une face latérale externe de son rebord.

Un inconvénient majeur de ces bras de liaison connus réside dans leur inertie, leur rigidité et leur résistance parfois insatisfaisantes en utilisation aux contraintes de traction-compression, de flexion, de flambage et également aux efforts accidentels extrêmes, pour un allégement obtenu tout relatif.

Un but de la présente invention est de proposer un bras de liaison adapté pour relier une première structure ou masse par exemple non suspendue à une seconde structure ou masse par exemple suspendue, qui permette de remédier à ces inconvénients, le bras comportant des logements respectivement adaptés pour recevoir une première articulation de liaison à ladite première structure ou masse et au moins une seconde articulation de liaison à ladite seconde structure ou masse, le bras comprenant :
- une portion de rigidification principale qui est formée d'un premier matériau composite à matrice thermoplastique ou thermodurcissable renforcée par des fibres et qui comprend un rebord périphérique du bras formant ainsi un pourtour de rigidification pour le bras, et
- une portion anti-flambement qui est intercalée dans ladite portion de rigidification et qui s'étend à partir dudit rebord sur sensiblement tout le bras.

A cet effet, un bras selon l'Invention est tel que lesdites fibres sont continues et réunies sous la forme d'un écheveau enroulé principal continu de premières dites fibres s'étendant le long dudit rebord, lequel enserre la portion anti-flambement.

Par « écheveau », on entend dans la présente description une mèche de fibres continues adjacentes qui sont assemblées de manière sensiblement linéaire suivant une configuration géométrique déterminée, et particulièrement facilement réalisable par enroulement.

On notera que cet écheveau de fibres continues orientées le long du rebord périphérique du bras est tout particulièrement apte à travailler en traction-compression en utilisation et confère une rigidité et une résistance particulièrement élevée au bras, conjointement à une résistance au flambement également très satisfaisante procurée par la portion anti-flambement ainsi enserrée par la portion de rigidification, tout en procurant un allégement significatif pour le bras en comparaison des bras métalliques.

On notera également que les efforts à transmettre sont avantageusement concentrés dans une multitude de fibres constituant cet écheveau et localisées dans la zone périphérique la plus extérieure du bras formant un rebord nervuré de raidissement, ce qui permet de maximiser l'inertie, la résistance et la rigidité du bras. Quant à la portion anti-flambement, elle permet de reprendre les efforts de flambage résultant de la compression dont cette zone périphérique est le siège privilégié. Comme cela sera expliqué ci-après, cette portion anti-flambement peut être réalisée par un voile plan médian renforcé lui-même de part et d'autre par des écheveaux secondaires réalisant des sous-triangulations dudit rebord périphérique du bras formant un pourtour de rigidification principal pour ce bras.

On notera en outre que l'on peut utiliser, à titre de matrice thermoplastique pour imprégner et enrober les fibres, tous polymères thermoplastiques adaptés aux bras de suspension et notamment les polyamides (PA) tels que par exemple PA6, PA66, PA4.6, PA12 et les polysulfures de phénylène (PPS), à titre non limitatif.

S'agissant des matrices thermodurcissables utilisables pour ces fibres, on peut par exemple citer les résines époxy et les résines polyester, à titre non limitatif.

Selon une autre caractéristique de l'invention, la portion de rigidification peut former une coque périphérique externe pour le bras comprenant deux demi-coques sensiblement planes qui forment des nervures pour le bras renforcées par ledit écheveau principal, la portion anti-flambement étant insérée entre lesdites demi-coques.

On notera que cette portion anti-flambement peut être avantageusement située dans le plan longitudinal médian du bras, plan qui dans le cas préférentiel d'une pièce moulée sert de plan de joint de démoulage du bras.

On notera également qu'un tel bras selon l'invention rigidifié par un tel matériau composite peut être ainsi obtenu par assemblage de deux préformes complémentaires et plus ou moins symétriques dans un outillage, tel qu'un moule, comme expliqué ci-après.

Selon une autre caractéristique de l'invention, ledit écheveau principal peut être sensiblement unidirectionnel (i.e. comprenant un assemblage droit d'une mèche de fibres quasiment parallèles formant une mèche) et il peut être optionnellement enserré dans une gaine tabulaire principale qui est par exemple tissée, tricotée ou tressée.

On notera que cette gaine avantageusement textile permet de protéger l'écheveau quasi-unidirectionnel qu'elle enserre des contraintes extérieures tant lors du procédé de fabrication du bras qu'en utilisation, et en facilite la manipulation et le positionnement dans le procédé de moulage de la pièce.

Avantageusement, le bras peut être adapté pour équiper une suspension d'une roue d'un véhicule automobile et peut alors comporter trois dits logements disposés en triangle respectivement adaptés pour recevoir ladite première articulation formée d'une rotule de liaison à une fusée de ladite roue constituant ladite première masse non suspendue, et deux dites secondes articulations axiales de liaison à un châssis dudit véhicule constituant ladite seconde masse suspendue, et lesdites premières fibres peuvent être choisies dans le groupe constitué par les fibres continues de carbone, de verre, d'aramide (e.g. de dénomination Kevlar®), de lin, de basalte (ou autres fibres naturelles) et des combinaisons d'au moins deux desdites fibres.

On notera que l'on peut avantageusement utiliser à titre de fibres continues quasi-unidirectionnelles dans la présente invention de telles fibres sélectionnées dans leur version de grammage ou de titre le plus élevé, de sorte que ces fibres puissent prendre les rayons sur le pourtour et à l'intérieur du bras tout en restant suffisamment tendues.

Selon un mode préférentiel de réalisation de l'invention, la portion anti-flambement présente au moins une zone présentant un pourtour situé vers l'intérieur dudit rebord qui n'est pas recouverte par la portion de rigidification, de sorte que ladite au moins une zone forme un voile définissant une épaisseur minimale pour le bras.

La portion de rigidification peut alors avantageusement comprendre en outre au moins un tronçon de liaison qui s'étend vers l'intérieur dudit rebord auquel il est raccordé et qui délimite avec ledit rebord deux dites zones renforcées sur leurs pourtours respectifs, vers l'intérieur et le long dudit écheveau principal dans ledit rebord et dans ledit tronçon de liaison, par un premier écheveau auxiliaire de secondes dites fibres continues et par un second écheveau auxiliaire de troisièmes dites fibres continues. Selon la forme et la taille du bras de liaison, ces écheveaux auxiliaires peuvent être déclinés autant de fois que nécessaire, pour former autant de sous-triangulations de l'écheveau principal que nécessaire pour en assurer la stabilité au flambement. Ces écheveaux auxiliaires imbriqués dans l'écheveau principal forment ainsi des sous-triangulations de rigidification et de déchargement du pourtour de rigidification principal.

Conformément à ce mode préférentiel de l'invention, ledit premier écheveau auxiliaire et ledit second écheveau auxiliaire peuvent être avantageusement chacun sensiblement unidirectionnels et respectivement enserrés dans deux gaines tubulaires auxiliaires par exemple en textile tissé, tricoté ou tressé, lesdites secondes fibres et troisièmes fibres étant par exemple identiques auxdites premières fibres.

Egalement selon ce mode de réalisation, l'un desdits logements adapté pour recevoir une dite seconde articulation peut présenter un bord sensiblement circulaire défini par ledit rebord et par un autre dit tronçon de liaison raccordé audit rebord, ledit bord pouvant être renforcé vers l'intérieur dudit écheveau principal et d'un dit second écheveau auxiliaire par un troisième écheveau auxiliaire de quatrièmes dites fibres continues.

Egalement selon ce mode de réalisation, ledit troisième écheveau auxiliaire peut être sensiblement unidirectionnel et être enserré dans une autre gaine tubulaire auxiliaire par exemple en textile tissé, tricoté ou tressé, lesdites quatrièmes fibres étant par exemple identiques auxdites premières fibres, secondes fibres et troisièmes fibres.

On notera qu'il est ainsi possible de prévoir plus de deux écheveaux auxiliaires de sous-triangulation.

Egalement selon ce mode préférentiel de réalisation, ladite portion de rigidification peut comprendre avantageusement en outre des inserts de comblement qui sont localisés entre ledit écheveau principal et l'un au moins desdits premier écheveau auxiliaire et second écheveau auxiliaire et/ou dans des régions incurvées et/ou à proximité immédiate de ladite première articulation et/ou de ladite au moins une seconde articulation, lesdits inserts de comblement étant en particulier adaptés pour réduire en utilisation les effets des contraintes de pliage ou de dépliage appliquées au bras et/ou pour s'opposer aux départs de fissures en fatigue et/ou pour s'opposer au flambement local du bras dans lesdites régions incurvées.

Toujours selon ce mode de réalisation, ledit logement adapté pour recevoir par exemple par emmanchement ladite première articulation formée de ladite rotule peut être formé sur une platine dont est pourvu le bras et qui est montée au contact de ladite portion de rigidification et de ladite portion anti-flambement, ladite platine enserrant une partie dudit rebord.

On notera qu'en fonction de la forme et de la longueur de la platine, il est ainsi possible d'adapter la voie du véhicule en modifiant la longueur de cette platine. Ce choix de fixation de la platine recevant, la rotule sur le bras de liaison permet, pour un seul bras de liaison fabriqué selon un outillage et un procédé déterminés, de monter ce bras sur différents modèles de véhicules en utilisant à chaque fois une platine adaptée.

On notera également que cette platine est conçue pour transmettre un maximum d'efforts par ses surfaces de contact avec le rebord périphérique du bras rigidifié par lesdites fibres que ce rebord contient, et pour minimiser les efforts dans les vis de fixation utilisables pour l'assemblage de la platine au bras.

En variante de cette platine, la rotule peut être emmanchée directement dans une articulation montée dans un logement prévu à cet effet à un sommet du bras.

D'une manière générale en référence à l'ensemble des caractéristiques précitées, la portion anti-flambement peut être avantageusement formée d'un voile en un second matériau composite à matrice thermoplastique ou thermodurcissable renforcée par des fibres de voile identiques ou différentes desdites fibres dudit premier matériau composite et qui peuvent être choisies dans le groupe constitué par les fibres continues de carbone, de verre, d'aramide, de lin, de basalte (ou autres fibres naturelles) et des combinaisons d'au moins deux desdites fibres.

Avantageusement, ce voile composite peut comprendre au moins deux couches superposées de tissus à base desdites fibres de voile qui sont par exemple des tissus multiaxiaux (i.e. avec des orientations de fibres selon des angles différents dans la superposition de couches).

On notera que des tissus de type « NCF » (pour « Non Crimp Fabric ») par exemple biaxiaux sont utilisables. On peut d'une manière générale utiliser des nappes orientées de façon à obtenir des angles permettant de maximiser la tenue mécanique du bras.

On notera également que ce voile composite peut être découpé facilement par des moyens automatisés avec des formes extérieures pouvant être complexes (e.g. arrondies, droites, à facettes, etc.), et que ce matériau composite utilisé pour le voile permet d'obtenir une préforme à moindre coût avec un niveau de performance maximum pour lutter efficacement contre le flambement

En variante, le portion anti-flambement peut être formée d'un voile en un matériau métallique, ce qui présente comme avantage d'être plus facile à obtenir et donc d'impliquer un coût de fabrication réduit en comparaison d'un voile composite. En effet, il suffit de découper suivant la forme voulue une plaque par exemple en acier, éventuellement emboutie, pour qu'elle soit prête à recevoir l'écheveau principal de fibres continues sensiblement unidirectionnelle sur sa périphérie.

Concernant un tel bras de liaison hybride à portion de rigidification composite et à voile anti-flambement métallique, on notera par ailleurs qu'il est possible de sertir la rotule directement dans ce voile métallique, ce qui procure un gain de poids supplémentaire (grâce à l'absence de la platine précitée) en dépit de l'impossibilité d'adapter ce bras à rotule sertie à différents modèles de véhicules.

Un procédé de fabrication selon l'invention d'un bras de liaison tel que défini ci-dessus dont la portion de rigidification comprend deux demi-coques superposées de part et d'autre de ladite portion anti-flambement, comprend les étapes suivantes :
a) enroulement d'une mèche principale desdites premières fibres continues sur au moins un mandrin pour l'obtention dudit écheveau principal pour chaque demi-coque,
b) préformage dudit écheveau principal sur une empreinte principale pour l'obtention d'une préforme principale de chaque demi-coque,
c) insertion dans un moule de ladite préforme principale, de ladite portion anti-flambement et desdits logements pour ladite première articulation et ladite au moins une seconde articulation, pour les deux demi-coques, puis
d) injection dans le moule, par exemple par moulage par transfert de résine (« RTM »), de ladite matrice thermoplastique ou thermodurcissable au contact dudit écheveau principal, de ladite portion anti-flambement et desdits logements, pour obtenir les deux demi-coques superposées et solidaires de ladite portion anti-flambement.

Conformément audit mode préférentiel de réalisation de l'invention, ce procédé peut comprendre lesdites étapes suivantes :
a) enroulement sur ledit au moins un mandrin de ladite mèche principale, d'une première mèche auxiliaire de secondes dites fibres continues et d'une seconde mèche auxiliaire de troisièmes dites fibres continues, pour l'obtention dudit écheveau principal et de premier et second écheveaux auxiliaires,
b) préformage dudit écheveau principal, dudit premier écheveau auxiliaire et dudit second écheveau auxiliaire pour l'obtention d'une préforme comprenant ladite préforme principale, une première préforme auxiliaire et une seconde préforme auxiliaire,
c) insertion dans ledit moule de ladite préforme principale entourant ladite première préforme auxiliaire et ladite seconde préforme auxiliaire, de ladite portion anti-flambement et desdits logements, puis
d) injection dans ledit moule de ladite matrice au moins au contact dudit écheveau principal, dudit premier écheveau auxiliaire et dudit second écheveau auxiliaire, de ladite portion anti-flambement et desdits logements.

On notera que ce procédé de fabrication selon l'invention permet d'obtenir des bras de liaison présentant à la fois une rigidité et une résistance très élevées, tout en utilisant des préformes relativement faciles à réaliser et donc d'un coût d'obtention réduit.

Selon une variante de réalisation de l'invention, on peut pour l'étape a) précitée réaliser un enroulement continu à partir d'une seule et même mèche de fibres continues sensiblement unidirectionnelles sur un unique mandrin, ce mandrin pouvant être constitué de deux parties extractibles ou d'un mandrin de type « voile » qui reste dans la pièce obtenue. Plus précisément, on peut réaliser cet enroulement sur mandrin unique pour chaque demi-coque successivement par :
- un bobinage initial pour réaliser la triangulation autour des trois logements d'articulations (i.e. le passage d'efforts et la liaison des trois logements),
- un bobinage complémentaire de renforcement au niveau de ces trois logements, et
- un bobinage final pour finir le remplissage de chaque préforme de demi-coque.

D'autres caractéristiques, avantages et détails de la présente invention ressortiront à la lecture de la description suivante de plusieurs exemples de réalisation de l'invention, donnés à titre illustratif et non limitatif, ladite description étant réalisée en référence avec les dessins joints, parmi lesquels :
la figure 1 est une vue de dessus et en perspective d'un bras de liaison pour suspension de véhicule automobile selon un exemple de l'invention,
la figure 2 est une vue de dessus et en perspective d'un bras de liaison analogue à celui de la figure 1 mais qui s'en distingue notamment par sa portion de rigidification et sa platine destinée à recevoir la rotule,
la figure 3 est une vue en plan d'une préforme d'un voile anti-flambement utilisable pour fabriquer les bras des figures 1 ou 2,
la figure 4 est une photographie d'une mèche de fibres continues et sensiblement unidirectionnelles utilisable pour renforcer la portion de rigidification d'un bras selon l'invention tel que celui des figures 1 ou 2,
la figure 5 est une vue schématique illustrant l'étape a) d'enroulement de six mèches principale et auxiliaires de fibres continues sur six mandrins selon un exemple de réalisation de l'invention, pour obtenir des préformes destinées à renforcer ce bras,
la figure 6 est une vue schématique d'une empreinte de préformage pour pré-consolider l'un des écheveaux auxiliaires enroulés à la figure 5,
la figure 7 est une vue schématique montrant deux préformes symétriques l'une de l'autre destinées à former deux demi-coques et contenant chacune les écheveaux de fibres obtenus à la figure 5 et pré-consolidés suivant la figure 6, avant insertion dans un moule, et
la figure 8 est une vue de dessus et en perspective des deux parties respectivement supérieure et inférieure d'un moule de type portefeuille utilisable à titre d'exemple pour mettre en oeuvre les étapes c) et d).

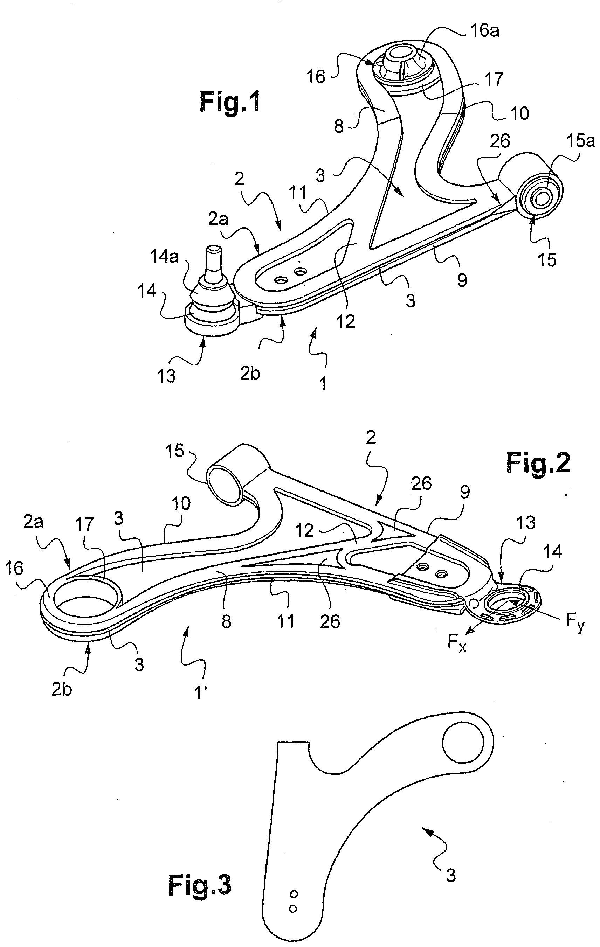

D'une manière générale en référence aux figures 1 et 2, les deux secondes articulations équipant un bras de liaison selon l'invention globalement triangulaire pour suspension peuvent être orientées non seulement selon des axes perpendiculaires entre eux respectivement horizontaux et verticaux comme sur ces figures, mais encore selon toute autre direction en fonction de la configuration de la première masse non suspendue concernée (e.g. le train de roues) et de sa liaison à la seconde masse suspendue (e.g. au châssis).

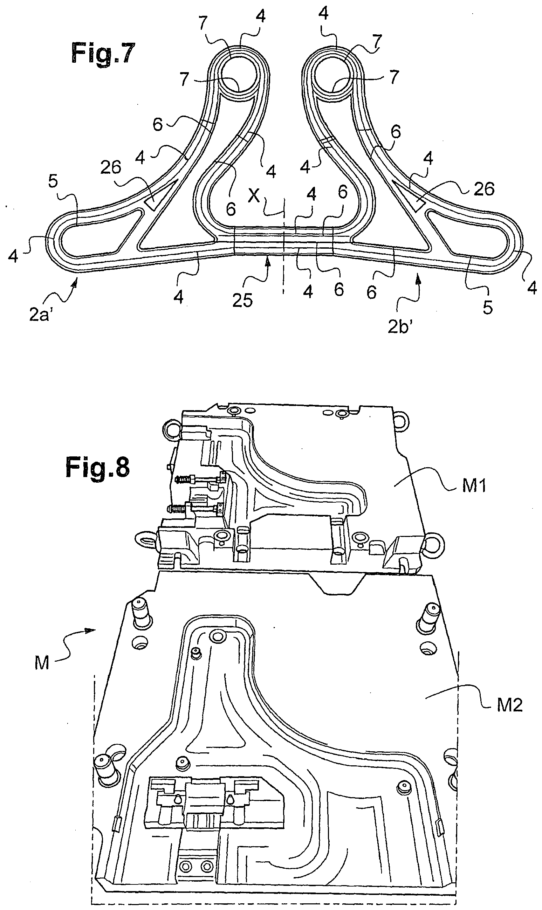

Comme visible aux figures 1 et 2, un bras de liaison 1, 1' selon l'invention pour suspension de véhicule automobile comprend essentiellement une portion de rigidification 2 ou coque formée de deux demi-coques 2a et 2b identiques superposées avec intercalation d'un voile anti-flambement 3 dans le plan longitudinal médian de la coque 2 ainsi obtenue. Chaque demi-coque 2a, 2b est réalisée en un matériau composite à matrice thermoplastique ou thermodurcissable renforcée par des écheveaux 4, 5, 6, 7 de mèches de fibres continues sensiblement unidirectionnelles (ces écheveaux 4 à 7 sont visibles à la figure 7).

De préférence, ces fibres sont choisies pour cette application parmi les fibres de carbone HR (i.e. de haute résistance) comme par exemple les fibres de carbone de dénomination 50k, ce qui permet de minimiser le coût de fabrication du bras 1, 1' tout en améliorant l'efficacité du procédé.

En variante, on peut également utiliser :
- des fibres de verre, telles que celles connues sous la dénomination Verre E de préférence ou Verre S (de titre égal à 4800 tex),
- des fibres d'aramide (e.g. de Kevlar® k49 ou k29),
- des fibres de lin,
- des fibres de basalte, et/ou
- d'autres fibres naturelles.

Comme expliqué ci-dessus, on utilise avantageusement pour ces fibres celles présentant un grammage ou titre le plus élevé, de sorte que les écheveaux 4, 5, 6, 7 correspondants puissent prendre les rayons sur le pourtour et à l'intérieur du bras 1, 1' sans perdre leur tension.

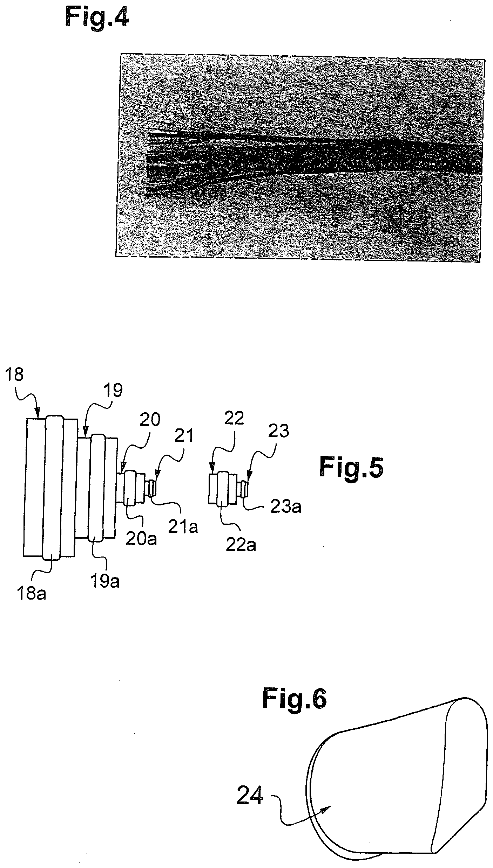

On obtient classiquement des mèches de ces fibres continues à partir d'une bobine, ces mèches étant par exemple telles que la mèche de fibres de carbone HR illustrée à la figure 4.

Comme visible aux figures 1 et 2, chaque demi-coque 2a, 2b présente une forme correspondant globalement à la périphérie d'un triangle, sous la forme d'un rebord 8 plat s'étendant uniquement sur les trois côtés 9, 10, 11 du triangle et sur un tronçon de liaison 12 reliant deux de ces côtés 9 et 11 l'un à l'autre. En d'autres termes, chaque demi-coque 2a, 2b est vide à l'intérieur du rebord 8, de part et d'autre du tronçon de liaison 12.

Plus précisément, chaque demi-coque 2a, 2b est définie dans cet exemple de réalisation par :
- un premier côté 9 sensiblement rectiligne s'étendant d'un premier sommet du triangle adjacent à une platine 13 (laquelle est extérieure aux demi-coques 2a, 2b et définit un premier logement 14 recevant une rotule 14a de liaison à une fusée de roue), jusqu'à un second logement 15 en un second sommet du triangle recevant une articulation axiale 15a de liaison au châssis d'axe par exemple horizontal,
- un second côté 10 successivement concave puis convexe s'étendant selon un profil rentrant et concave à partir du second logement 15 et s'infléchissant pour se terminer par un profil sortant et convexe jusqu'à un troisième sommet du triangle où est formé un troisième logement 16 recevant une autre articulation axiale 16a de liaison au châssis d'axe par exemple vertical, et
- un troisième côté 11 globalement concave qui s'étend selon un profil continûment rentrant et concave du troisième logement 16 au premier logement 14, et qui est relié au premier côté 9 par le tronçon de liaison 12 lui-même sensiblement droit et incliné de manière oblique par rapport au premier côté 9 en étant globalement parallèle à la courbure convexe du second côté 10.

Encore plus précisément, on voit aux figures 1 et 2 que le troisième logement 16 de forme circulaire est délimité pour moitié par le contour convexe en demi-cercle du troisième sommet et pour moitié par le contour concave d'un autre tronçon 17 qui prolonge ce contour convexe entre les second et troisième côtés 10 et 11 en formant un bord interne du troisième logement 16.

On voit aux figures 1 et 2 que la rotule 14a est fixée par exemple par sertissage sur la platine 13 qui est assemblée ici par vissage aux demi-coques 2a, 2b. Quant aux second et troisième logements 15 et 16, ils sont respectivement définis par des bagues composites pouvant recevoir les articulations 15a et 16a correspondantes par emmanchement à force ou par surmoulage.

Le voile anti-flambement 3 de forme également globalement triangulaire (son profil correspond à celui de chaque demi-coque 2a, 2b) qui est inséré entre les demi-coques 2a, 2b vient occuper sensiblement toute leur surface, vu que ce voile 3 s'étend de manière continue à partir des bords internes respectifs des trois logements 14, 15, 16 de chaque demi-coque 2a, 2b. Comme expliqué précédemment, le voile 3 qui présente une épaisseur minimale pour le bras 1, 1' (nettement inférieure à celle de chaque demi-coque 2a, 2b) est principalement conçu pour empêcher le flambement du bras 1, 1' lorsque celui-ci est fortement sollicité. Le voile 3 peut être également réalisé en un matériau composite à matrice thermoplastique ou thermodurcissable renforcée par des fibres, ou en variante en un matériau métallique par exemple en acier. De préférence, ce voile 3 comprend plusieurs couches composites superposées de tissus multiaxiaux tels que des couches de « NCF » biaxiaux.
La figure 3 montre un exemple de profil utilisable pour une préforme du voile 3, lequel a été découpé de manière précise et automatisée.
Les figures 5 à 8 illustrent la mise en oeuvre d'un procédé de fabrication d'un bras 1, 1' tel que celui des figures 1 ou 2, selon un exemple de l'invention utilisant une pluralité de mandrins 18, 19, 20, 21, 22, 23 pour l'enroulement de mèches continues 18a, 19a, 20a, 21a, 22a, 23a (étant précisé qu'il est possible en variante d'utiliser un unique mandrin, comme expliqué ci-dessus).

Conformément à cet exemple de la figure 5, on commence par enrouler les mèches 18a à 23a respectivement autour des mandrins 18 à 23, chaque mèche 18a à 23a étant préalablement poudrée ou imprégnée pour en faciliter sa manipulation ultérieure. On obtient ainsi plusieurs préformes élémentaires sous la forme d'autant d'écheveaux 4, 5, 6, 7 de mèches continues. Dans l'exemple illustré à la figure 5 relatif à la fabrication d'un bras de suspension, on a utilisé six mandrins 18 à 23 recevant six mèches 18a à 23a, parmi lesquels on dénombre quatre mandrins différents 18 à 21 et autant d'écheveaux différents 4 à 7 obtenus suite à cette première étape d'enroulement. Le nombre et les diamètres respectifs des mandrins sont définis en fonction des périmètres des écheveaux à obtenir correspondant à leur disposition sur le rebord périphérique 8 et à l'intérieur de chaque demi-coque 2a, 2b.

Plus précisément, on obtient ainsi dans cet exemple de réalisation un écheveau principal 4 destiné à renforcer le rebord 8 de chaque demi-coque 2a, 2b, et trois écheveaux auxiliaires 5, 6, 7 respectivement destinés à renforcer des pourtours internes au rebord 8, de part et d'autre du tronçon de liaison 12 et du bord 17 du troisième logement 16.

On procède ensuite à une pré-consolidation de chaque écheveau principal 4 et auxiliaire 5, 6, 7 ainsi obtenu (voir figure 7), et on l'enveloppe dans une gaine tubulaire de protection en treillis (non représentée) par exemple sous forme de textile tressé, tissé ou tricoté, sur une empreinte de préformage 24 de forme correspondant à celle recherchée pour l'écheveau 4, 5, 6, 7 au sein de chaque demi-coque 2a, 2b, comme illustré à la figure 6 qui montre une empreinte 24 pour l'écheveau auxiliaire 5 devant renforcer le pourtour délimité par le tronçon de liaison 12, une partie du premier côté 9 et la partie adjacente du troisième côté 11.

Comme illustré à la figure 7, deux préformes identiques 2a', 2b' des demi-coques 2a, 2b sont réunies entre elles par un segment de liaison 25 prolongeant linéairement leurs rebords 8 entre leurs seconds sommets 15 respectifs et sont respectivement destinées à former les deux demi-coques 2a, 2b (ces préformes 2a', 2b' sont symétriques l'une de l'autre par rapport à un axe X médian de ce segment 25). L'écheveau principal 4 qui s'étend de manière continue sur les rebords périphériques 8 des deux préformes 2a', 2b' a pour fonction de reprendre les efforts principaux de flexion en maximisant l'inertie du triangle constitué par le bras 1, 1' finalement obtenu, dans un mode de flexion plane de ce triangle.

Un premier et un second écheveaux auxiliaires 5 et 6 sont prévus vers l'intérieur de l'écheveau principal 4 et sont respectivement situés de part et d'autre du tronçon de liaison 12 en s'étendant également le long d'une partie du premier et du troisième côtés 9 et 11 (vers le premier sommet pour le premier écheveau auxiliaire 5 et vers le troisième sommet pour le second écheveau auxiliaire 6). Ces écheveaux auxiliaires 5 et 6 qui forment des triangulations internes à l'écheveau principal 4 globalement triangulaire ont pour fonction de renforcer cet écheveau principal 4, en particulier lorsque celui-ci est de forme courbe ou particulièrement longue (comme cela est le cas à la figure 7), notamment pour l'empêcher de se déformer par flambage. On peut voir à la figure 7 que les seconds écheveaux auxiliaires 6 respectifs des deux préformes 2a', 2b' sont également reliés entre eux en se prolongeant continûment le long du segment de liaison 25.

Est en outre visible à la figure 7 pour chaque préforme 2a', 2b' un troisième écheveau auxiliaire 7 disposé de manière circulaire sur le pourtour du bord 17 du troisième logement 16, vers l'intérieur de l'écheveau principal 4 et du second écheveau auxiliaire 6.

Sont enfin visibles aux figures 2 et 7 des contre-formes ou inserts de comblement 26 présentant une géométrie par exemple triangulaire, que l'on peut avantageusement ajouter aux écheveaux 4 à 7 selon les besoins, aux intersections entre ces écheveaux 4 à 7 pour éviter des zones de vide qui pourraient générer des départs de fissures en fatigue, procurer un appui anti-flambement local des zones incurvées des écheveaux 4 à 7 à faible rayon de courbure et/ou réduire les contraintes de dépliage. Dans les exemples des figures 2 et 7, on a ainsi ajouté pour chaque préforme 2a', 2b' une ou deux contre-forme(s) de comblement 26 dans la zone de raccordement du tronçon de liaison 12 avec les premier et/ou troisième côtés 9, 11 du rebord 8, entre l'écheveau principal 4 et les premier et second écheveaux auxiliaires 5 et 6.

La figure 1 montre un autre emplacement possible pour une telle contre-forme de comblement 26, qui est ici insérée à proximité immédiate du second logement 15 recevant l'articulation 15a d'axe horizontal.

On place ensuite les préformes 2a', 2b' ainsi obtenues dans un moule ouvert M tel que celui illustré à la figure 8 qui est caractérisé par un mode de fermeture dit en portefeuille (ce moule « portefeuille » M est avantageusement utilisable en présence d'une articulation 15a d'axe horizontal comme celle reçue dans le second logement 15), puis on y dispose le voile anti-flambement 3 et les bagues composites formant les logements 15 et 16 des seconde et troisième articulations 15a et 16a.

Après fermeture du moule M par mise en place de ses parties inférieure M1 et supérieure M2, on injecte en une seule opération de moulage mise en oeuvre par une technique de type « RTM » la matrice thermoplastique ou thermodurcissable, pour envelopper les divers écheveaux 4 à 7 et ainsi obtenir les deux demi-coques 2a, 2b solidarisées avec les deux faces du voile de flambage 3.

Comme visible aux figures 1 et 2, on assemble ensuite à l'emplacement du premier sommet la platine 13 recevant la rotule 14a et encapsulant une partie du rebord 8 et du voile 3. Comme expliqué précédemment, la platine 13 rapportée sur le bras 1, 1' ne représente qu'une possibilité parmi d'autres pour le montage de la rotule 14a, cette possibilité présentant néanmoins l'avantage de permettre d'adapter le bras 1, 1' à différents modèles de véhicules en modifiant la longueur de la platine 13 pour un même bras 1, 1' fabriqué.

En résumé et comme notamment visible à la figure 2, un bras de liaison 1, 1' selon l'invention permet de résister efficacement aux efforts accidentels extrêmes Fx et Fy dont la rotule 14a est le siège en roulage (l'effort Fy est sensiblement dirigé le long du premier côté rectiligne 9 du bras 1, 1' vers le second côté 10, et l'effort Fx est perpendiculaire à Fy en étant dirigé vers le troisième côté concave 11). L'écheveau principal périphérique 4 transmet ces efforts principaux vers les articulations 15a, 16a et la rotule 14a.

Plus précisément, il est à noter que :
- lors d'un tel effort défini majoritairement par la composante Fx, le troisième côté 11 du rebord 8 travaille essentiellement en compression alors que les premier et second côtés 9 et 10 du rebord 8 travaillent tous deux légèrement en traction, et que
- lors d'un tel effort défini majoritairement par la composante Fy, ce premier côté 9 travaille essentiellement en compression alors que ces second et troisième côtés 10 et 11 travaillent légèrement en traction.

Les essais réalisés par la Demanderesse montrent que la présente invention permet d'obtenir des bras de liaison 1, 1' procurant un gain de poids :
- supérieur à 60 % si tant la portion de rigidification 2 que le voile anti-flambement 3 sont réalisés en matériaux composites exclusivement renforcés par des fibres de carbone, en comparaison d'un bras de forme similaire mais entièrement métallique ;
- de l'ordre de 30 % si tant la portion de rigidification 2 que le voile anti-flambement 3 sont réalisés en matériaux composites, mais avec des fibres de carbone pour renforcer la portion de rigidification 2 et des fibres de verre pour renforcer le voile 3 ; et
- de l'ordre de 40 % si la seule portion de rigidification 2 est réalisée en un matériau composite renforcé par des fibres de carbone, alors que le voile anti-flambement 3 est réalisé en acier.

Par conséquent, l'utilisation de fibres continues de carbone pour renforcer au moins la portion de rigidification 2 et optionnellement en outre le voile 3 constitue un exemple préférentiel de réalisation de invention, grâce aux propriétés spécifiques très intéressantes des fibres de carbone notamment de type HR pour l'utilisation des bras 1, 1' dans un dispositif de suspension de véhicule automobile. Concrètement, les trois alternatives mentionnées ci-dessus permettent d'obtenir un gain de poids par véhicule compris entre 0,77 kg (soit environ 77 mg de CO₂ émis en moins) et 1,5 kg (soit environ 150 mg de CO₂ émis en moins).

## Revendications

1. Bras de liaison (1, 1') adapté pour relier une première structure ou masse par exemple non suspendue à une seconde structure ou masse par exemple suspendue, le bras comportant des logements (14, 15, 16) respectivement adaptés pour recevoir une première articulation de liaison (14a) à ladite première structure ou masse et au moins une seconde articulation de liaison (15, 16) à ladite seconde structure ou masse, le bras comprenant :
- une portion de rigidification (2) qui est formée d'un premier matériau composite à matrice thermoplastique ou thermodurcissable renforcée par des fibres et qui comprend un rebord périphérique (8) du bras, et
- une portion anti-flambement (3) qui est intercalée dans ladite portion de rigidification et qui s'étend à partir dudit rebord sur sensiblement tout le bras,
**caractérisé en ce que** lesdites fibres sont continues et sont réunies sous la forme d'un écheveau enroulé principal (4) continu de premières dites fibres s'étendant le long dudit rebord, lequel enserre ladite portion anti-flambement.

2. Bras de liaison (1, 1') selon la revendication 1, **caractérisé en ce que** ladite portion de rigidification (2) forme une coque périphérique externe pour le bras comprenant deux demi-coques (2a, 2b) sensiblement planes qui forment des nervures pour le bras renforcées par ledit écheveau principal (4), ladite portion anti-flambement (3) étant insérée entre lesdites demi-coques.

3. Bras de liaison (1, 1') selon une des revendications précédentes, **caractérisé en ce que** le bras est utilisable pour équiper une suspension d'une roue d'un véhicule automobile et comporte trois dits logements (14, 15, 16) disposés en triangle respectivement adaptés pour recevoir ladite première articulation (14a) formée d'une rotule de liaison à une fusée de ladite roue constituant ladite première structure ou masse non suspendue, et deux dites secondes articulations axiales (15a, 16a) de liaison à un châssis dudit véhicule constituant ladite seconde structure ou masse suspendue, et **en ce que** lesdites premières fibres sont choisies dans le groupe constitué par les fibres continues de carbone, de verre, d'aramide, de lin, de basalte et des combinaisons d'au moins deux desdites fibres.

4. Bras de liaison (1, 1') selon une des revendications précédentes, **caractérisé en ce que** ladite portion anti-flambement (3) présente au moins une zone présentant un pourtour situé vers l'intérieur dudit rebord (8) qui n'est pas recouverte par ladite portion de rigidification (2), de sorte que ladite au moins une zone forme un voile définissant une épaisseur minimale pour le bras.

5. Bras de liaison (1, 1') selon les revendications 3 et 4, **caractérisé en ce que** ladite portion de rigidification (2) comprend en outre au moins un tronçon de liaison (12) qui s'étend vers l'intérieur dudit rebord (8) auquel il est raccordé et qui délimite avec ledit rebord deux dites zones renforcées sur leurs pourtours respectifs, vers l'intérieur et le long dudit écheveau principal (4) dans ledit rebord et dans ledit tronçon de liaison, par un premier écheveau auxiliaire (5) de secondes dites fibres continues et par un second écheveau auxiliaire (6) de troisièmes dites fibres continues.

6. Bras de liaison (1, 1') selon la revendication 5, **caractérisé en ce que** ledit premier écheveau auxiliaire (5) et ledit second écheveau auxiliaire (6) sont chacun sensiblement unidirectionnels et, optionnellement, sont respectivement enserrés dans deux gaines tubulaires auxiliaires par exemple tissées, tricotées ou tressées, lesdites secondes fibres et troisièmes fibres étant par exemple identiques auxdites premières fibres.

7. Bras de liaison (1, 1') selon la revendication 5 ou 6, **caractérisé en ce que** l'un desdits logements (16) adapté pour recevoir une dite seconde articulation (16a) présente un bord sensiblement circulaire défini par ledit rebord (8) et par un autre dit tronçon de liaison (17) raccordé audit rebord, ledit bord étant renforcé vers l'intérieur dudit écheveau principal (4) et dudit second écheveau auxiliaire (6) par un troisième écheveau auxiliaire (7) de quatrièmes dites fibres continues.

8. Bras de liaison (1, 1') selon la revendication 7, **caractérisé en ce que** ledit troisième écheveau auxiliaire (17) est sensiblement unidirectionnel et est optionnellement enserré dans une gaine tubulaire auxiliaire par exemple tissée, tricotée ou tressée, lesdites quatrièmes fibres étant par exemple identiques auxdites premières fibres, secondes fibres et troisièmes fibres.

9. Bras de liaison (1, 1') selon une des revendications 5 à 8, **caractérisé en ce que** ladite portion de rigidification (2) comprend en outre des inserts de comblement (26) qui sont localisés entre ledit écheveau principal (4) et l'un au moins desdits premier écheveau auxiliaire (5) et second écheveau auxiliaire (6) et/ou dans des régions incurvées et/ou à proximité immédiate de ladite première articulation (14) et/ou de ladite au moins une seconde articulation (15, 16), lesdits inserts de comblement étant en particulier adaptés pour réduire en utilisation les effets des contraintes de pliage ou de dépliage appliquées au bras et/ou pour s'opposer aux départs de fissures en fatigue et/ou pour s'opposer au flambement local du bras dans lesdites régions incurvées.

10. Bras de liaison (1, 1') selon une des revendications 5 à 9, **caractérisé en ce que** ledit logement (14) adapté pour recevoir ladite première articulation (14a) formée de ladite rotule est formé sur une platine (13) dont est pourvu le bras et qui montée au contact de ladite portion de rigidification (2) et de ladite portion anti-flambement (3), ladite platine enserrant une partie dudit rebord (8).

11. Bras de liaison (1, 1') selon une des revendications précédentes, **caractérisé en ce que** ledit écheveau principal (4) est sensiblement unidirectionnel et est enserré dans une gaine tubulaire principale qui est par exemple tissée, tricotée ou tressée.

12. Bras de liaison (1, 1') selon une des revendications précédentes, **caractérisé en ce que** ladite portion anti-flambement (3) est formée d'un voile en un second matériau composite à matrice thermoplastique ou thermodurcissable renforcée par des fibres de voile identiques ou différentes desdites fibres dudit premier matériau composite et qui sont choisies dans le groupe constitué par les fibres continues de carbone, de verre, d'aramide, de lin, de basalte et des combinaisons d'au moins deux desdites fibres.

13. Bras de liaison (1, 1') selon la revendication 12, **caractérisé en ce que** ledit voile (3) comprend au moins deux couches superposées de tissus à base desdites fibres de voile qui sont par exemple des tissus multiaxiaux.

14. Bras de liaison (1, 1') selon une des revendications précédentes, **caractérisé en ce que** ladite portion anti-flambement (3) est formée d'un voile en un matériau métallique.

15. Procédé de fabrication d'un bras de liaison (1, 1') selon une des revendications précédentes dont ladite portion de rigidification (2) comprend deux demi-coques (2a, 2b) superposées de part et d'autre de ladite portion anti-flambement (3), **caractérisé en ce que** le procédé comprend les étapes suivantes :
a) enroulement de ladite mèche principale (18a) desdites premières fibres continues sur au moins un mandrin (18) pour l'obtention d'un écheveau principal (4) pour chaque demi-coque,
b) préformage dudit écheveau principal sur une empreinte principale pour l'obtention d'une préforme principale (2a', 2b') de chaque demi-coque,
c) insertion dans un moule (M) de ladite préforme principale, de ladite portion anti-flambement et desdits logements (14, 15, 16) pour ladite première articulation (14a) et ladite au moins une seconde articulation (15a, 16a), pour les deux demi-coques, puis
d) injection dans le moule de ladite matrice thermoplastique ou thermodurcissable au contact dudit écheveau principal, de ladite portion anti-flambement et desdits logements, pour obtenir les deux demi-coques superposées et solidaires de ladite portion anti-flambement.

16. Procédé selon la revendication 15, **caractérisé en ce que** le procédé comprend lesdites étapes :
a) enroulement sur ledit au moins un mandrin (18, 19, 20) de ladite mèche principale (18a), d'une première mèche auxiliaire (19a) de secondes dites fibres continues et d'une seconde mèche auxiliaire (20a) de troisièmes dites fibres continues, pour l'obtention dudit écheveau principal (4) et de premier et second écheveaux auxiliaires (5 et 6),
b) préformage dudit écheveau principal, dudit premier écheveau auxiliaire et dudit second écheveau auxiliaire pour l'obtention d'une préforme (2a', 2b') comprenant ladite préforme principale, une première préforme auxiliaire et une seconde préforme auxiliaire,
c) insertion dans ledit moule (M) de ladite préforme principale entourant ladite première préforme auxiliaire et ladite seconde préforme auxiliaire, de ladite portion anti-flambement (3) et desdits logements (14, 15, 16), puis
d) injection dans ledit moule de ladite matrice au moins au contact dudit écheveau principal (4), dudit premier écheveau auxiliaire (5) et dudit second écheveau auxiliaire (6), de ladite portion anti-flambement et desdits logements.

## Patentansprüche

1. Verbindungsarm (1, 1'), der angepasst ist, um eine erste, beispielsweise nicht aufgehängte Struktur oder Masse, mit einer zweiten, beispielsweise aufgehängten Struktur oder Masse, zu koppeln, wobei der Arm Aufnahmen (14, 15, 16) einschließt, die jeweils angepasst sind, um ein erstes Verbindungsgelenk (14a) mit der ersten Struktur oder Masse und mindestens ein zweites Verbindungsgelenk (15, 16) mit der zweiten Struktur oder Masse aufzunehmen, wobei der Arm umfasst:
- einen Versteifungsabschnitt (2), der aus einem ersten Verbundmaterial mit thermoplastischer oder duroplastischer Matrix gebildet ist, das durch Fasern verstärkt ist und das einen Umfangsrand (8) des Arms umfasst, und
- einen Antiknickabschnitt (3), der in den Versteifungsabschnitt eingeschoben ist und der sich vom Rand ausgehend über im Wesentlichen den ganzen Arm erstreckt,
**dadurch gekennzeichnet, dass** die Fasern kontinuierlich sind und in Form eines kontinuierlichen aufgewickelten Hauptstrangs (4) der ersten Fasern vereinigt sind, die sich entlang des Randes erstrecken, der den Antiknickabschnitt umschließt.

2. Verbindungsarm (1, 1') nach Anspruch 1, **dadurch gekennzeichnet, dass** der Versteifungsabschnitt (2) eine äußere Umfangsschale für den Arm bildet, die zwei im Wesentlichen ebene Halbschalen (2a, 2b) umfasst, die Rippen für den Arm bilden, die vom Hauptstrang (4) verstärkt werden, wobei der Antiknickabschnitt (3) zwischen den Halbschalen eingefügt ist.

3. Verbindungsarm (1, 1') nach einem der vorstehenden Ansprüche, **dadurch gekennzeichnet, dass** der Arm verwendbar ist, um eine Aufhängung eines Rads eines Automobilfahrzeugs auszurüsten und die drei Aufnahmen (14, 15, 16), die jeweils angepasst sind, um das erste Gelenk (14a) aufzunehmen, das aus einem Kugelgelenk zur Verbindung mit einem Antrieb des Rads, das die erste nicht aufgehängte Struktur oder Masse ausmacht, in einem Dreieck angeordnet einschließt, und aus zwei der zweiten axialen Gelenke (15a, 16a) zur Verbindung mit einem Fahrwerk des Fahrzeugs, das die zweite aufgehängte Struktur oder Masse ausmacht, gebildet ist, und dadurch, dass die ersten Fasern ausgewählt sind aus der Gruppe, bestehend aus kontinuierlichen Kohle-, Glas-, Aramid-, Flachs-, Basaltfasern und Kombinationen von mindestens zwei der Fasern.

4. Verbindungsarm (1, 1') nach einem der vorstehenden Ansprüche, **dadurch gekennzeichnet, dass** der Antiknickabschnitt (3) mindestens eine Zone aufweist, der eine zur Innenseite des Randes (8) gelegene Umrandung aufweist, die nicht vom Versteifungsabschnitt (2) bedeckt ist, sodass der mindestens eine Bereich eine Umhüllung bildet, die eine Mindestdicke für den Arm definiert.

5. Verbindungsarm (1, 1') nach einem der Ansprüche 3 und 4, **dadurch gekennzeichnet, dass** der Versteifungsabschnitt (2) weiter mindestens ein Verbindungsteilstück (12) umfasst, das sich zur Innenseite des Randes (8), mit dem es verbunden ist, erstreckt, und das mit dem Rand die zwei verstärkten Zonen auf ihren jeweiligen Umrandungen zur Innenseite und entlang des Hauptstranges (4) im Rand und im Verbindungsteilstück, durch einen ersten Hilfsstrang (5) der zweiten der kontinuierlichen Fasern und durch einen zweiten Hilfsstrang (6) der dritten der kontinuierlichen Fasern abgrenzt.

6. Verbindungsarm (1, 1') nach Anspruch 5, **dadurch gekennzeichnet, dass** jeder des ersten Hilfsstrangs (5) und des zweiten Hilfsstrangs (6) im Wesentlichen unidirektional und wahlweise jeweils in zwei rohrförmigen, beispielsweise gewebten, gestrickten oder geflochtenen, Hilfshüllen umschlossen sind, wobei die zweiten Fasern und dritten Fasern beispielsweise mit den ersten Fasern identisch sind.

7. Verbindungsarm (1, 1') nach Anspruch 5 oder 6, **dadurch gekennzeichnet, dass** die eine der Aufnahmen (16), die angepasst ist, um eines des zweiten Gelenks (16a) aufzunehmen, eine im Wesentlichen kreisförmige Kante aufweist, die durch den Rand (8) und durch ein anderes Verbindungsteilstück (17), das mit dem Rand verbunden ist, definiert wird, wobei die Kante zur Innenseite des Hauptstrangs (4) und des zweiten Hilfsstrangs (6) durch einen dritten Hilfsstrang (7) der vierten kontinuierlichen Fasern verstärkt wird.

8. Verbindungsarm (1, 1') nach Anspruch 7, **dadurch gekennzeichnet, dass** der dritte Hilfsstrang (17) im Wesentlichen unidirektional ist und wahlweise jeweils in einer rohrförmigen, beispielsweise gewebten, gestrickten oder geflochtenen, Hilfshülle umschlossen ist, wobei die vierten Fasern beispielsweise mit den ersten Fasern, zweiten Fasern und dritten Fasern identisch sind.

9. Verbindungsarm (1, 1') nach einem der Ansprüche 5 bis 8, **dadurch gekennzeichnet, dass** der Versteifungsabschnitt (2) weiter Auffülleinsätze (26) umfasst, die sich zwischen dem Hauptstrang (4) und dem mindestens einen des ersten Hilfsstrangs (5) und zweiten Hilfsstrangs (6) und/oder in gekrümmten Bereichen und/oder in unmittelbarer Nähe des ersten Gelenks (14) und/oder des mindestens einen zweiten Gelenks (15, 16) befinden, wobei die Auffülleinsätze insbesondere angepasst sind, um bei Gebrauch die Wirkungen der am Arm angebrachten Einschränkungen des Zusammenfaltens oder Auseinanderfaltens zu verringern und/oder um dem Beginn von Ermüdungsrissen entgegenzuwirken und/oder um dem lokalen Knicken des Arms in den gekrümmten Bereichen entgegenzuwirken.

10. Verbindungsarm (1,1') nach einem der Ansprüche 5 bis 9, **dadurch gekennzeichnet, dass** der die Aufnahme (14), die angepasst ist, um das erste Gelenk (14a) aufzunehmen, das aus dem Kugelgelenk gebildet ist, auf einer Platte (13) gebildet ist, die mit dem Arm versehen ist und die beim Kontakt mit dem Versteifungsabschnitt (2) und dem Antiknickabschnitt (3) angehoben wird, wobei die Platte einen Teil des Randes (8) umschließt.

11. Verbindungsarm (1, 1') nach einem der vorstehenden Ansprüche, **dadurch gekennzeichnet, dass** der Hauptstrang (4) im Wesentlichen unidirektional ist und in einer rohrförmigen Haupthülle, die beispielsweise gewebt, gestrickt oder geflochten ist, umschlossen ist.

12. Verbindungsarm (1, 1') nach einem der vorstehenden Ansprüche, **dadurch gekennzeichnet, dass** der Antiknickabschnitt (3) aus einer Umhüllung aus einem zweiten Verbundmaterial mit thermoplastischer oder duroplastischer Matrix gebildet ist, das durch Umhüllungsfasern verstärkt ist, die mit den Fasern des ersten Verbundmaterials identisch sind oder sich von diesen unterscheiden, und die ausgewählt sind aus der Gruppe, bestehend aus kontinuierlichen Kohle-, Glas-, Aramid-, Flachs-, Basaltfasern und Kombinationen von mindestens zwei der Fasern.

13. Verbindungsarm (1, 1') nach Anspruch 12, **dadurch gekennzeichnet, dass** die Umhüllung (3) mindestens zwei sich überlagernde Stoffschichten auf Basis der Umhüllungsfasern umfasst, die beispielsweise multiaxiale Stoffe sind.

14. Verbindungsarm (1, 1') nach einem der vorstehenden Ansprüche, **dadurch gekennzeichnet, dass** der Antiknickabschnitt (3) aus einer Umhüllung aus einem metallischen Material gebildet ist.

15. Verfahren zur Herstellung eines Verbindungsarms (1, 1') nach einem der vorstehenden Ansprüche, wobei der Versteifungsabschnitt (2) zwei sich überlagernde Halbschalen (2a, 2b) beidseitig des Antiknickabschnitts (3) umfasst, **dadurch gekennzeichnet, dass** das Verfahren die folgenden Schritte umfasst:
a) Aufwickeln der Hauptsträhne (18a) der ersten kontinuierlichen Fasern auf mindestens eine Spindel (18) zum Erhalten eines Hauptstrangs (4) für jede Halbschale,
b) Vorbilden des Hauptstrangs auf einem Hauptgepräge zum Erhalten einer Hauptvorform (2a', 2b') jeder Halbschale,
c) Einfügen der Hauptvorform, des Antiknickabschnitts und der Aufnahmen (14, 15, 16) für das erste Gelenk (14a) und das mindestens eine zweite Gelenk (15a, 16a) für die zwei Halbschalen in eine Form (M), danach
d) Einspritzen der thermoplastischen oder duroplastischen Matrix in die Form im Kontakt mit dem Hauptstrang, dem Antiknickabschnitt und den Aufnahmen, um die zwei sich überlagernden und mit dem Antiknickabschnitt fest verbundenen Halbschalen zu erhalten.

16. Verfahren nach Anspruch 15, **dadurch gekennzeichnet, dass** das Verfahren die Schritte umfasst:
a) Aufwickeln einer ersten Hilfssträhne (19a) der zweiten kontinuierlichen Fasern und einer zweiten Hilfssträhne (20a) der dritten kontinuierlichen Fasern auf die mindestens eine Spindel (18, 19, 20) der Hauptsträhne (18a) zum Erhalten des Hauptstrangs (4) und des ersten und zweiten Hilfsstrangs (5 und 6),
b) Vorbilden des Hauptstrangs, des ersten Hilfsstrangs und des zweiten Hilfsstrangs zum Erhalten einer Vorform (2a', 2b'), umfassend die Hauptvorform, eine erste Hilfsvorform und eine zweite Hilfsvorform,
c) Einfügen des Antiknickabschnitts (3) und der Aufnahmen (14, 15, 16) in die Form (M) der Hauptvorform, die die erste Hilfsvorform und die zweite Hilfsvorform umgibt, danach
d) Einspritzen der Matrix in die Form, mindestens im Kontakt mit dem Hauptstrang (4), dem ersten Hilfsstrang (5) und dem zweiten Hilfsstrangs (6), dem Antiknickabschnitt und den Aufnahmen.

## Claims

1. Link arm (1, 1') adapted to connect a first structure or mass, for example unsuspended, to a second structure or mass, for example suspended, wherein the arm comprises housings (14, 15, 16) respectively adapted to receive a first linkage joint (14a) to the first structure or mass and at least one second linkage joint (15, 16) to the second structure or mass, wherein the arm comprises:
- a stiffening portion (2) which is formed of a first thermoplastic or thermosetting matrix composite material reinforced with fibers and which comprises a peripheral rim (8) of the arm, and
- an anti-buckling portion (3) which is interposed in the stiffening portion and which extends from the rim over substantially the entire arm,
**characterized in that** the fibers are continuous and are united in the form of a main continuous coiled skein (4) of the first fibers extending along the rim, which encloses the anti-buckling portion.

2. Link arm (1, 1') according to claim 1, **characterized in that** the stiffening portion (2) forms an outer peripheral shell for the arm comprising two substantially flat half-shells (2a, 2b) which form arm ribs reinforced by the main skein (4), wherein the anti-buckling portion (3) is inserted between the half-shells.

3. Link arm (1, 1') according to one of the preceding claims, **characterized in that** the arm is used to equip a suspension of a wheel of a motor vehicle and comprises three housings (14, 15, 16) arranged in a triangle respectively adapted to receive the first joint (14a) comprising a ball joint to a stub axle constituting the first structure or unsuspended mass, and two second axial joints (15a, 16a) connecting to a chassis of the vehicle constituting the second suspended structure or mass, and wherein the first fibers are selected from the group consisting of continuous carbon, glass, aramid, linen, basalt and combinations of at least two of the fibers.

4. Link arm (1,1') according to one of the preceding claims, **characterized in that** the anti-buckling portion (3) has at least one area having a perimeter located towards the inside of the rim (8) which is not covered by the stiffening portion (2), so that the at least one area forms a web defining a minimum thickness for the arm.

5. Link arm (1, 1') according to claims 3 and 4, **characterized in that** the stiffening portion (2) further comprises at least one connecting section (12) which extends inwards of the rim (8) to which it is connected and which delimits with the rim two reinforced areas on their respective perimeters, inwards and along the main skein (4) in the rim and in the connecting section, by a first auxiliary skein (5) of second continuous fibers, and by a second auxiliary skein (6) of third continuous fibers.

6. Link arm (1, 1') according to claim 5, **characterized in that** the first auxiliary skein (5) and the second auxiliary skein (6) are each substantially unidirectional and, optionally, are respectively enclosed in two auxiliary tubular sleeves that are, for example, woven, knitted or braided, wherein the second fibers and third fibers are for example identical to the first fibers.

7. Link arm (1, 1') according to claim 5 or 6, **characterized in that** one of the housings (16) adapted to receive a second joint (16a) has a substantially circular edge defined by the rim (8) and by another connecting section (17) connected to the rim, wherein the edge is reinforced towards the inside of the main skein (4) and the second skein (6) by a third auxiliary skein (7) of the fourth continuous fibers.

8. Link arm (1, 1') according to claim 7, **characterized in that** the third auxiliary skein (17) is substantially unidirectional and is optionally enclosed in an auxiliary tubular sheath for example woven, knitted or braided, wherein the fourth fibers are, for example, identical to the first fibers, second fibers and third fibers.

9. Link arm (1, 1') according to one of the claims 5 to 8, **characterized in that** the stiffening portion (2) further comprises filling inserts (26) which are located between the main skein (4) and at least either the first auxiliary skein (5) and second auxiliary skein (6), and/or in curved regions and/or in close proximity to the first joint (14), and/or the at least one second joint (15, 16), wherein the filler inserts are particularly adapted to reduce the effects of folding or unfolding stresses applied to the arm in use and/or to oppose the fatigue crack starts and/or to oppose local buckling of the arm in the curved regions.

10. Link arm (1, 1') according to one of the claims 5 to 9, **characterized in that** the housing (14) adapted to receive the first joint (14a) formed by the ball, is formed on a plate (13) as part of the arm and mounted in contact with the stiffening portion (2) and the anti-buckling portion (3), wherein the plate encloses a portion of the rim (8).

11. Link arm (1, 1') according to one of the preceding claims, **characterized in that** the main skein (4) is substantially unidirectional and is enclosed in a main tubular sheath which is, for example, woven, knitted or braided.

12. Link arm (1, 1') according to one of the preceding claims, **characterized in that** the anti-buckling portion (3) comprises a web of a second composite material with thermoplastic or thermosetting matrix reinforced with fibers of webs identical or different from the fibers of the first composite material and which are selected from the group consisting of continuous carbon, glass, aramid, flax, basalt fibers and combinations of at least two of the fibers.

13. Link arm (1, 1') according to claim 12, **characterized in that** the web (3) comprises at least two superposed layers of fabrics based on the web fibers which are, for example, multiaxial tissues.

14. Link arm (1, 1') according to one of the preceding claims, **characterized in that** the anti-buckling portion (3) comprises a web of a metallic material.

15. Method of manufacturing a link arm (1, 1') according to one of the preceding claims wherein the stiffening portion (2) comprises two half-shells (2a, 2b) superimposed on either side of the anti-buckling portion (3), **characterized in that** the method comprises the following steps:
a) winding the main hank (18a) of the first continuous fibers on at least one mandrel (18) to obtain a main skein (4) for each half-shell,
b) preforming the main skein on a main impression to obtain a main preform (2a', 2b') of each half-shell,
c) inserting into a mold (M) of the main preform, the anti-buckling portion and the housings (14, 15, 16) for the first joint (14a) and the at least one second joint (15a, 16a), for both half-shells, and then
d) injection into the mold of the thermoplastic or thermosetting matrix in contact with the main skein, the anti-buckling portion and the housings, to obtain the two half-shells superimposed and integral with the anti-buckling portion.

16. Method according to claim 15, **characterized in that** the method comprises the steps:
a) winding on the at least one mandrel (18, 19, 20) of the main hank (18a), a first auxiliary hank (19a) of the second continuous fibers and a second auxiliary hank (20a) of the third continuous fibers, to obtain the main skein (4) and first and second auxiliary skeins (5 and 6),
b) preforming the main skein, the first skein and the second skein to obtain a preform (2a', 2b') comprising the main preform, a first auxiliary preform and a second auxiliary preform,
c) inserting in the mold (M) the main preform surrounding the first auxiliary preform and the second auxiliary preform, the anti-buckling portion (3) and the housings (14, 15, 16), and
d) injection into the mold of the matrix at least in contact with the main skein (4), the first skein (5) and the second skein (6), the anti-buckling portion and the housing.
